# EUROPÄISCHE PATENTANMELDUNG

(11) **EP 1 422 126 A1**
(43) Veröffentlichungstag der Anmeldung: **26.05.2004**
(21) Anmeldenummer: 03026483.2
(22) Anmeldetag: 20.11.2003
(51) Int. Cl.: B62D 25/06

(54) **Modulares Fahrzeugdach**

(30) Priorität: 22.11.2002 DE 10254773
(71) Anmelder: Webasto Vehicle Systems International GmbH, 82131 Stockdorf (DE)
(72) Erfinder: Braun, Robert, 82335 Berg (DE)
(74) Vertreter: Bedenbecker, Markus

(57) **Zusammenfassung**

Bei einem modularen Fahrzeugdach mit einem Dachmodul (10) zum Einsetzen in eine in der Karosserie des Fahrzeugs vorgesehene Montageöffnung (16), ist benachbart dem Rand (18) der Montageöffnung (16) mindestens ein Sicherungselement (24) vorgesehen, das im Falle eines Unfalls bei Verformung der Karosserie mit einem an der Unterseite des Dachmoduls (10) vorgesehenen Halteelement (30) derart zusammenwirkt, dass es ein Lösen des Dachmoduls aus der Montageöffnung verhindert.

## Beschreibung

Die vorliegende Erfindung betrifft ein modulares Fahrzeugdach mit einem Dachmodul zum Einsetzen in eine in der Karosserie des Fahrzeugs vorgesehene Montageöffnung.

Dachmodule, die von einem Fahrzeugzulieferer komplett vorgefertigt und dann vom Fahrzeughersteller bei der Endmontage des Fahrzeugs in eine in der Karosserie des Fahrzeugs vorgesehene Montageöffnung eingesetzt werden, sind beispielsweise aus der DE 100 33 232 A1 bekannt. Die Montage eines solchen Dachmoduls erfolgt dadurch, dass das Dachmodul von oben in die in der Karosserie des Fahrzeugs vorgesehene Montageöffnung eingesetzt und dort verklebt wird.

Gattungsgemäße Dachmodule sind beispielsweise aus dem Artikel "Moduldachsysteme für eine kundengerechte Fahrzeugindividualisierung" von A. Weißbrich et al., VDI-Berichte Nr. 1264, 1996, bekannt, wo ein Dachmodul beschrieben ist, welches eine als Dachblech ausgebildete Außenhaut sowie einen Trägerrahmen umfasst, an welchem das Dachblech auf eine nicht näher beschriebene Weise befestigt ist und welcher seinerseits zur Befestigung des Dachmoduls an der Fahrzeugrohbaustruktur mittels Einkleben von oben in eine Karosserieöffnung dient.

Obschon derartige modulare Fahrzeugdächer besonders einfach und damit kostensparend montiert werden können, da die Fixierung des Dachmoduls in der karosserieseitigen Montageöffnung einzig über eine bei der Montage einzubringende Kleberaupe erfolgt, kann sich gerade die Art der Montage negativ im Falle eines Unfalls auswirken. Wird bei einem Unfall die Karosserie im Bereich der Montageöffnung verformt, so kann es zu einem wenn auch nur teilweisen Bruch der Verklebung kommen, der sich aufgrund der hohen Trägheitskräfte, wie sie selbst bei Unfällen mit relativ niedriger Geschwindigkeit auftreten, ausgehend von der Bruchstelle ausweitet, was schließlich im ungünstigsten Fall zu einem vollständigen Lösen des Dachmoduls vom Fahrzeug führen kann.

Es ist daher Aufgabe der vorliegenden Erfindung, ein modulares Fahrzeugdach der eingangs genannten Art zu schaffen, dessen Integrität auch im Falle eines Unfalls, insbesondere eine Seitencrashs, gewährleistet oder zumindest verbessert ist.

Diese Aufgabe wird bei einem modularen Fahrzeugdach der eingangs genannten Art dadurch gelöst, dass benachbart dem Rand der Montageöffnung mindestens ein Sicherungselement vorgesehen ist, das im Falle eines Unfalls bei Verformung der Karosserie mit einem an der Unterseite des Dachmoduls vorgesehenen Halteelement derart zusammenwirkt, dass es ein Lösen des Dachmoduls aus der Montageöffnung verhindert.

Weitere Ausgestaltungen der Erfindung ergeben sich aus den Unteransprüchen.

Da die Wahrscheinlichkeit einer Verformung des die Montageöffnung aufweisenden Teils der Karosserie im Bereich der Seitenholme am größten ist, ist vorzugsweise jeweils mindestens ein Sicherungselement im Bereich der Seitenholme vorgesehen.

Das Sicherungselement kann einen an einem Seitenholm des Fahrzeugs vorgesehenen Vorsprung umfassen und/oder mindestens teilweise von dem Rand der Montageöffnung gebildet sein, so dass die Bereitstellung und Montage zusätzlicher Bauteile entfallen kann.

Vorzugsweise weist das Halteelement einen nach außen vorspringenden Eingriffsbereich auf, der so angeordnet ist, dass er ein Einsetzen des Dachmoduls in die Montageöffnung nicht behindert, der jedoch mit dem karosseriefesten Sicherungselement in Eingriff tritt, wenn der die Karosserie und damit das Sicherungselement in Richtung auf das Fahrzeuginnere verformt wird.

In weiterer Ausgestaltung der Erfindung kann das Halteelement als Profilbauteil ausgebildet sein und/oder so ausgestaltet sein, dass es den Seitenrand des Dachmoduls mindestens teilweise umgreift. Ist ferner das Dachmodul mit einer entlang dem Rand der Montageöffnung verlaufenden Auflagefläche verklebt, so kann das Halteelement gegenüberliegend der Auflagefläche angeordnet und mit dieser verklebt sein.

Bei dem Dachmodul kann es sich um ein Dachmodul handeln, wie es in der früheren deutschen Patentanmeldung 102 41 186.7 beschrieben ist.

Insbesondere kann das Dachmodul eine flächige Außenhaut und eine Trägerstruktur aufweisen, die zur Anbringung an der Karosserie des Fahrzeugs ausgebildet ist und an der die Außenhaut befestigt ist. Hierbei kann das Halteelement mit der Trägerstruktur und der Dachhaut verpresst sein. Die Trägerstruktur kann eine flächige Hohlraumstruktur aufweisen. Vorzugsweise besteht die Trägerstruktur aus Kunststoff oder weist einen Kunststoff enthaltenden Schichtaufbau auf, beispielsweise eine Wabenstruktur, die mit einer Deckschicht, insbesondere einer Glasfaserschicht, die ferner mit einem Kunstharz, insbesondere mit Polyurethan, getränkt sein kann, verschlossen ist.

Bevorzugte Ausführungsbeispiele der Erfindung werden im folgenden unter Bezugnahme auf die beiliegenden Zeichnungen im Detail beschrieben. Es zeigen:
- FIG. 1: einen schematische perspektivische Ansicht eines modularen Fahrzeugdachs gemäß der vorliegenden Erfindung; und
- FIG. 2: eine Schnittansicht durch das modulare Fahrzeugdach aus FIG. 1 im Bereich des Seitenholms.

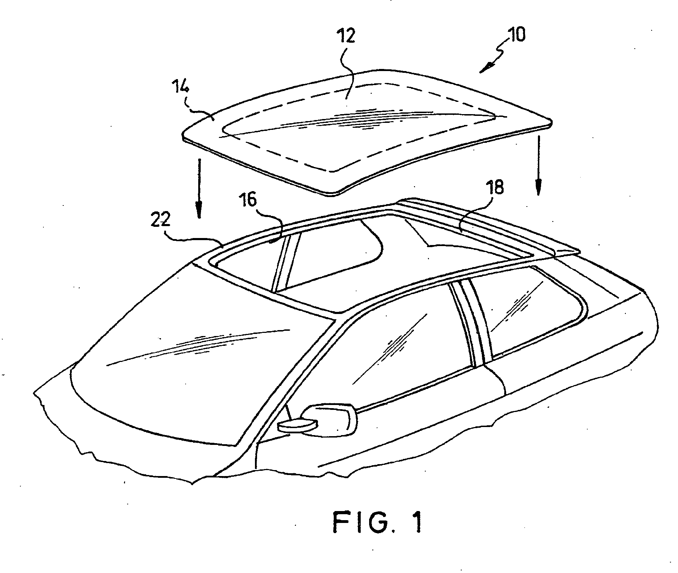

Gemäß FIG. 1 umfasst ein Dachmodul 10 eine Außenhaut 12, die an ihrer Unterseite mit einem Trägerrahmen 14 verbunden ist. Die Außenhaut 12 und der Trägerrahmen 14 können aus Metall oder aus Kunststoff gefertigt sein und bilden zusammen das Dachmodul 10, welches von oben in eine Fahrzeugkarosserieöffnung 16 eingesetzt wird und auf dem Umfangsrand 18 der Karosserieöffnung verklebt wird. Der seitliche Rand der Karosserieöffnung wird dabei von einem Seitenholm 22 gebildet.

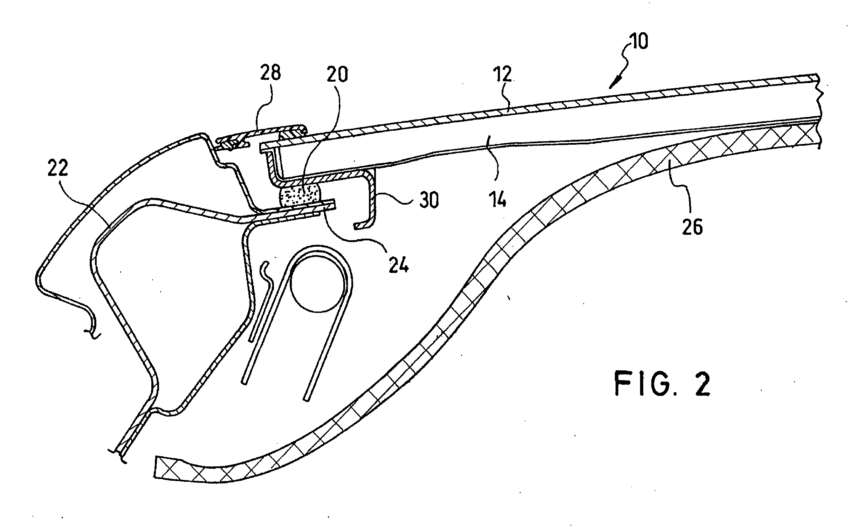

In FIG. 2, die eine Schnittansicht durch das modulare Fahrzeugdach aus FIG. 1 im Bereich des Seitenholms 22 zeigt, ist dargestellt, wie das aus der Außenhaut 12 und dem Trägerrahmen 14 aufgebaute Dachmodul 10 in der Karosserieöffnung 16 befestigt ist. Wie gezeigt, weist der Seitenholm 22 einen Flansch 24 auf, auf dem eine Kleberaupe 20 aufgebracht ist, auf die bei das Dachmodul 10 aufgelegt ist, um so für eine Klebeverbindung zwischen dem Flansch 24 und dem Trägerrahmen 14 zu sorgen. Das Dachmodul 10 kann ferner eine Innenverkleidung 26 aufweisen, die beim Einsetzen des Dachmoduls 10 in die Karosserieöffnung 16 nach innen gefaltet wird. Nach Passieren der Karosserieöffnung 16 wird die Innenverkleidung 26 nach außen und nach oben aufgefaltet und an der Innenseite des Seitenholms sowie am vorderen und am hinteren Querholm befestigt. Zur Abdichtung des Randspaltes zwischen der Außenhaut 12 und dem Rand der Karosserieöffnung 16, die in FIG. 2 vom Innenrand des Seitenholms 22 gebildet wird, kann eine Dichtung 28 vorgesehen sein.

Wird bei einem Unfall die Karosserie im Bereich der Montageöffnung verformt, was insbesondere im Falle eines Seitencrashs auftreten kann, bei welchem der Seitenholm 22 in Richtung auf die Fahrgastkabine verformt wird, so kann es im Klebebereich zu einem adhäsiven oder kohäsiven Bruch der Klebestelle kommen. Um in einem solchen Fall das Lösen des Dachmoduls 10 von der Fahrzeugkarosserie zu verhindern, ist an der Unterseite des Dachmoduls 10 ein Halteelement 30 vorgesehen, das bei einer Verformung des Seitenholms 22 in Eingriff mit einem an dem Seitenholm vorgesehenen Sicherungselement tritt. Bei der in FIG. 2 dargestellten Ausführungsform ist das Halteelement 30 als ein den Seitenrand des Dachmoduls 10 umgreifendes Profilbauteil ausgebildet, und wird das Sicherungselement von dem nach innen vorspringenden Montageflansch 24 des Seitenholms 22 gebildet.

Bei einer Verformung des Seitenholms 22 im Falle eines Seitencrashs wandert der Seitenholm 22 nach innen und hakt sich nach einem möglichen Bruch der Verklebung in das Halteelement 30 ein, wodurch ein Lösen des Dachmoduls 10 von der Fahrzeugkarosserie verhindert wird.

Es versteht sich, dass derartige Halte- und Sicherungselemente vorzugsweise zu beiden Seiten des Daches vorgesehen sind, so dass sich das Dachmodul 10 im Crash-Fall mit Hilfe der Halteelemente 30 zwischen dem linken und dem rechten Seitenholm verspreizt.

Der horizontale Abstand zwischen dem am weitesten nach außen vorspringenden freien Rand des Halteelements 30 und dem am weitesten nach innen vorspringenden freien Rand des Sicherungselements, d.h. in FIG. 2 des Flansches 24, sollte zwar möglichst gering gewählt werden, jedoch nicht so gering, dass er das Einsetzen des Dachmoduls 10 in die Karosserieöffnung übermäßig erschwert.

Ferner versteht sich, dass mehrere Halteelemente 30 entlang dem Umfang des Dachmoduls 10 vorgesehen werden können, oder aber als Profilbauteile ausgebildete Halteelemente, die sich über eine größere Strecke oder auch die gesamt Länge des Dachmoduls erstrecken.

Der Zusammenbau des Dachmoduls 10 kann in besonders vorteilhafter Weise dadurch erfolgen, dass die Halteelemente 30 in einem Arbeitsgang mit der Trägerstruktur, hier dem Trägerrahmen 14, und der Außenhaut 12 verpresst werden.

Bei der Außenhaut 12 kann es sich um ein Metallblech, beispielsweise ein bandlackiertes (coil-coated) Stahlblech oder Aluminiumblech oder um eine Kunststofffolie handeln. Bei dem Trägerrahmen 14, der vorzugsweise als Hohlraumträgerstruktur ausgebildet ist, kann es sich insbesondere um eine Wabenstruktur, beispielsweise aus Papier, Aluminium oder Kunststoff handeln. Ist die Trägerstruktur ferner mit Abschlusslagen versehen, so werden hierfür vorzugsweise glasfaserverstärkte Polyurethanlagen verwendet, die mittels des Long-Fiber-Injection-Verfahrens (LFI-Verfahren) hergestellt wurden. Ebenso kann aber auch für die Trägerstruktur selbst ein mittels des Long-Fiber-Injection-Verfahrens (LFI-Verfahren) hergestellter Kunststoff eingesetzt werden.

### Bezugszeichenliste

- 10: Dachmodul
- 12: Außenhaut
- 14: Trägerrahmen
- 16: Karosserieöffnung
- 18: Umfangsrand von 16
- 20: Kleberaupe
- 22: Seitenholm
- 24: Flansch
- 26: Innenverkleidung
- 28: Randspaltdichtung
- 30: Halteelement

## Patentansprüche

1. Modulares Fahrzeugdach mit einem Dachmodul (10) zum Einsetzen in eine in der Karosserie des Fahrzeugs vorgesehene Montageöffnung (16), **dadurch gekennzeichnet, dass** benachbart dem Rand (18) der Montageöffnung (16) mindestens ein Sicherungselement (24) vorgesehen ist, das im Falle eines Unfalls bei Verformung der Karosserie mit einem an der Unterseite des Dachmoduls (10) vorgesehenen Halteelement (30) derart zusammenwirkt, dass es ein Lösen des Dachmoduls aus der Montageöffnung verhindert.

2. Fahrzeugdach nach Anspruch 1, **dadurch gekennzeichnet, dass** jeweils mindestens ein Sicherungselement (24) zu beiden Seiten der Montageöffnung (16) vorgesehen ist.

3. Fahrzeugdach nach Anspruch 1 oder 2, **dadurch gekennzeichnet, dass** das Sicherungselement einen an einem Seitenholm (22) des Fahrzeugs vorgesehenen Vorsprung (24) umfasst.

4. Fahrzeugdach nach einem der vorhergehenden Ansprüche, **dadurch gekennzeichnet, dass** das Sicherungselement (24) mindestens teilweise von dem Rand der Montageöffnung (16) gebildet wird.

5. Fahrzeugdach nach einem der vorhergehenden Ansprüche, **dadurch gekennzeichnet, dass** das Halteelement (30) einen nach außen vorspringenden Eingriffsbereich aufweist, der so angeordnet ist, dass er ein Einsetzen des Dachmoduls (10) in die Montageöffnung (16) nicht behindert.

6. Fahrzeugdach nach einem der vorhergehenden Ansprüche, **dadurch gekennzeichnet, dass** das Halteelement (30) als Profilbauteil ausgebildet ist.

7. Fahrzeugdach nach Anspruch 6, **dadurch gekennzeichnet, dass** das Halteelement (30) den Seitenrand des Dachmoduls (10) mindestens teilweise umgreift.

8. Fahrzeugdach nach einem der vorhergehenden Ansprüche, **dadurch gekennzeichnet, dass** sich das Halteelement (30) im wesentlichen über die gesamte Länge des Dachmoduls (10) erstreckt.

9. Fahrzeugdach nach einem der vorhergehenden Ansprüche, **dadurch gekennzeichnet, dass** das Dachmodul (10) mit einer entlang dem Rand der Montageöffnung (16) verlaufenden Auflagefläche verklebt ist.

10. Fahrzeugdach nach Anspruch 9, **dadurch gekennzeichnet, dass** das Halteelement (30) gegenüberliegend der Auflagefläche angeordnet und mit dieser verklebt ist.

11. Fahrzeugdach nach einem der vorhergehenden Ansprüche, **dadurch gekennzeichnet, dass** das Dachmodul eine flächige Außenhaut (12) und eine Trägerstruktur (14) aufweist, die zur Anbringung an der Karosserie des Fahrzeugs ausgebildet ist und an der die Außenhaut befestigt ist.

12. Fahrzeugdach nach Anspruch 11, **dadurch gekennzeichnet, dass** das Halteelement (30) mit der Trägerstruktur (14) und der Außenhaut (12) verpresst ist.

13. Fahrzeugdach nach Anspruch 11 oder 12, **dadurch gekennzeichnet, dass** die Trägerstruktur (14) eine flächige Hohlraumstruktur aufweist.

14. Fahrzeugdach nach einem der Ansprüche 11 bis 13, **dadurch gekennzeichnet, dass** die Trägerstruktur (14) aus Kunststoff besteht.

15. Fahrzeugdach nach einem der Ansprüche 11 bis 13, **dadurch gekennzeichnet, dass** die Trägerstruktur (14) einen Kunststoff enthaltenden Schichtaufbau aufweist.

16. Fahrzeugdach nach Anspruch 15, **dadurch gekennzeichnet, dass** der Schichtaufbau eine Wabenstruktur aufweist, die mit einer Deckschicht verschlossen ist.

17. Fahrzeugdach nach Anspruch 16, **dadurch gekennzeichnet, dass** die Deckschicht eine Glasfaserschicht ist.

18. Fahrzeugdach nach Anspruch 17, **dadurch gekennzeichnet, dass** die Glasfaserschicht mit einem Kunstharz, insbesondere mit Polyurethan, getränkt ist.
